# EUROPEAN PATENT SPECIFICATION

(11) **EP 4 325 313 B1**
(45) Date of publication and mention of the grant of the patent: **02.09.2026**
(21) Application number: 22787923.6
(22) Date of filing: 16.03.2022
(51) Int. Cl.: E02F 9/26, G05B 23/02

(54) **MALFUNCTION PREDICTION SYSTEM**
FEHLFUNKTIONSVORHERSAGESYSTEM
SYSTÈME DE PRÉDICTION DE PANNES

(30) Priority: 14.04.2021 JP 2021068549
(43) Date of publication of application: 21.02.2024
(73) Proprietor: Hitachi Construction Machinery Co., Ltd., Tokyo 110-0015 (JP)
(72) Inventor: TAKAMI, Hiroki, Tsuchiura-shi, Ibaraki 300-0013 (JP); INOSE, Satoshi, Tsuchiura-shi, Ibaraki 300-0013 (JP); OKU, Shinichi, Tsuchiura-shi, Ibaraki 300-0013 (JP); KAKUTANI, Yuji, Tokyo 100-8280 (JP); YADA, Tomoki, Tsuchiura-shi, Ibaraki 300-0013 (JP)
(74) Representative: MERH-IP Matias Erny Reichl Hoffmann Patentanwälte PartG mbB
(86) International application number: PCT/JP2022/011789
(87) International publication number: WO 2022/219997

(56) References cited:
- EP-A1- 2 413 124
- EP-A1- 2 416 140
- JP-A- 2005 182 558
- JP-A- 2008 165 352
- JP-A- 2009 087 235
- JP-A- 2016 157 280
- JP-A- 2020 102 097
- JP-A- 2020 135 133

## Description

### Technical Field

The present invention relates to a malfunction prediction system that predicts a malfunction of a work machine such as a hydraulic excavator.

### Background Art

In predicting a malfunction of a work machine, since there is a wide range of components, the probability of malfunction occurrence varies also depending on the use environment or the frequency of use. Therefore, various techniques have been proposed. For example, Patent Literature 1 discloses a malfunction prediction system that improves prediction accuracy by learning with comparison between a malfunction prediction value and actual performance (whether any event has occurred) within a predetermined period of time.
Patent Literature 2 discloses an abnormality detecting device for a construction machine that can estimate an abnormality occurring to a component of the construction machine based on the relationship among a plurality of pieces of sensor information and thereby prevent machine failure.

### Citation List

### Patent Literature

Patent Literature 1: JP 2016-157280 A
Patent Literature 2: EP 2413124 A1

### Summary of Invention

### Technical Problem

However, in the malfunction prediction system described in Patent Literature 1 above, since the comparison with a malfunction prediction value is made based on whether any event has occurred in a target of prediction within a predetermined period of time, actual performance including unexpected responses in a period other than the predetermined period of time is not considered. Therefore, there has been a difficulty in improving the prediction accuracy.

The present invention has been made for solving such a technical issue and provides a malfunction prediction system capable of improving the malfunction prediction accuracy.

### Solution to Problem

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. A malfunction prediction system according to the present invention is a malfunction prediction system that predicts a malfunction of a work machine and includes: an operation information acquisition section that acquires operation information of the work machine; an inspection information acquisition section that acquires inspection information of the work machine; a part replacement/repair information acquisition section that acquires part replacement/repair information of the work machine; and a malfunction prediction section that predicts a malfunction probability of each part of the work machine, based on the operation information acquired by the operation information acquisition section, the inspection information acquired by the inspection information acquisition section, the part replacement/repair information acquired by the part replacement/repair information acquisition section, and deviation information between the malfunction probability of each part of the work machine and inspection performance of the work machine stored in a storage section.

In the malfunction prediction system according to the present invention, the malfunction prediction section predicts a malfunction probability of each part of the work machine, based on the operation information acquired by the operation information acquisition section, the inspection information acquired by the inspection information acquisition section, the part replacement/repair information acquired by the part replacement/repair information acquisition section, and the deviation information between the malfunction probability of each part of the work machine and the inspection performance of the work machine stored in the storage section. Thus, in this manner, the malfunction probability is predicted based on the operation information of the work machine by further incorporating (adding) the inspection information, the part replacement/repair information, and the deviation information between the malfunction probability and the inspection performance, so that the malfunction prediction accuracy can be improved.

### Advantageous Effects of Invention

According to the present invention, the malfunction prediction accuracy can be improved.

### Brief Description of Drawings

Fig. 1 is a schematic configurational view showing a malfunction prediction system according to an embodiment.
Fig. 2 is a block diagram showing the malfunction prediction system according to the embodiment.
Fig. 3 is a chart showing an example of malfunction probability data.
Fig. 4 is a chart showing an example of inspection item data.
Fig. 5 is a chart showing an example of main part data.
Fig. 6 is a flowchart showing control processing of a server.
Fig. 7 is a flowchart showing control processing on an inspection item screen of a portable terminal.
Fig. 8 is a flowchart showing control processing on a main part screen of the portable terminal.
Fig. 9 is a flowchart showing control processing on a malfunction probability screen of the portable terminal.
Fig. 10 is a chart showing an example of the inspection item screen of the portable terminal.
Fig. 11 is a chart showing an example of the main part screen of the portable terminal.
Fig. 12 is a chart showing an example of the malfunction probability screen of the portable terminal.
Fig. 13 is a schematic configurational view showing a modification of the malfunction prediction system.
Fig. 14 is a schematic configurational view showing a modification of the malfunction prediction system.

### Description of Embodiment

Hereinafter, an embodiment of a malfunction prediction system according to the present invention will be described with reference to the drawings. In the description of the drawings, the same elements are assigned the same reference signs and their overlapping descriptions are omitted. Further, the following description will be made by illustrating a hydraulic excavator as a work machine as a target of malfunction prediction, but the work machine may be a wheel loader or other work machines, without being limited to the hydraulic excavator.

Further, in the following description, wording such as "component" or "part" is used. "Component" is basically larger than "part" in area. For example, a component "front" is composed of parts, such as a boom, an arm, and a bucket. However, an "engine," for example, may be assumed as either a component or a part. Thus, a component and a part indicate the same depending on the contents in some cases.

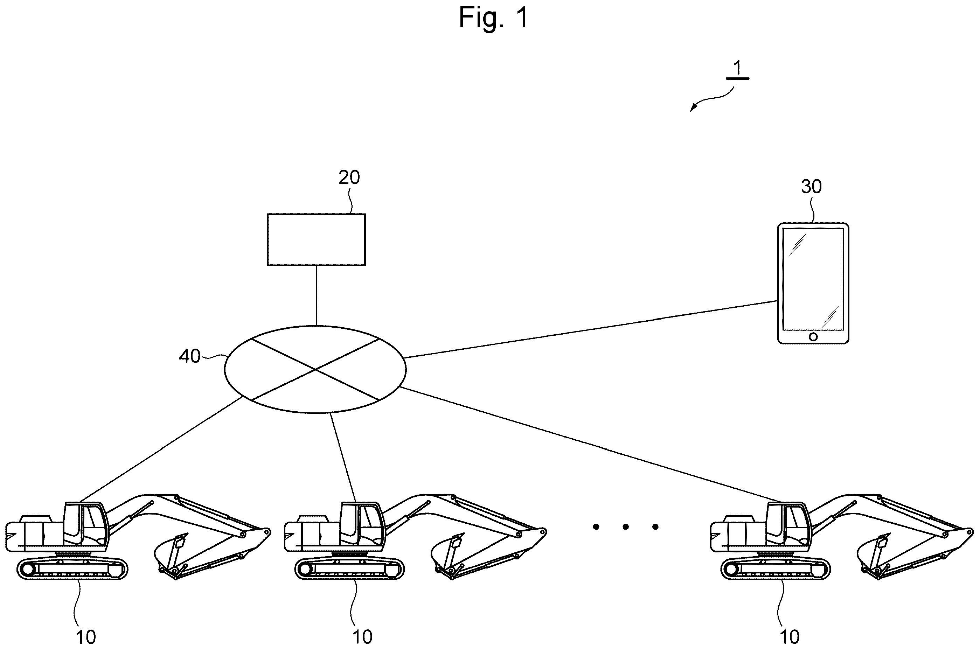

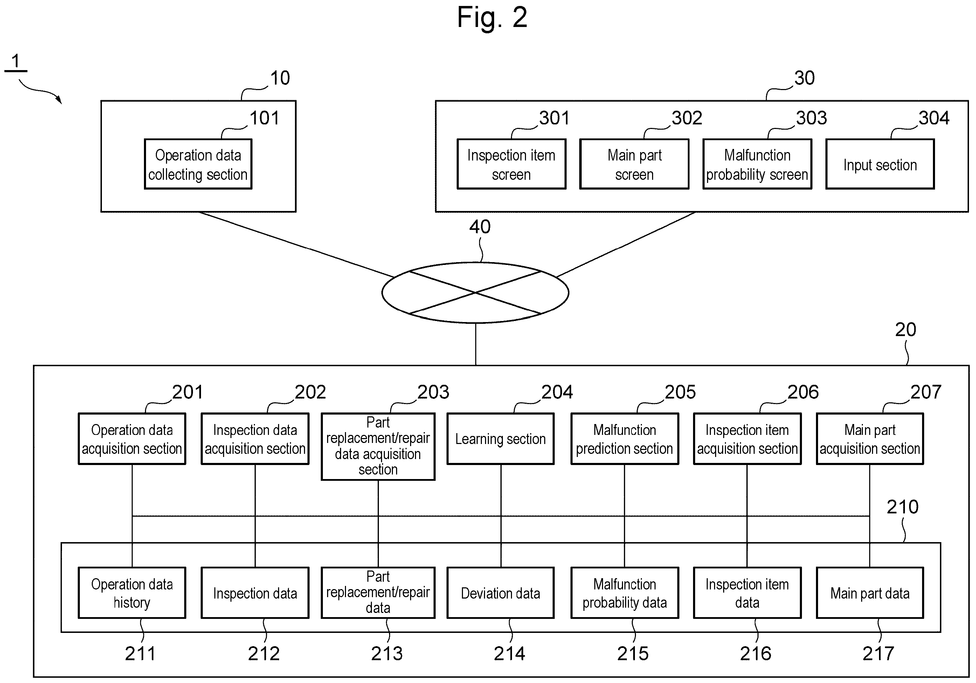

Fig. 1 is a schematic configurational view showing a malfunction prediction system according to an embodiment, and Fig. 2 is a block diagram showing the malfunction prediction system according to the embodiment. A malfunction prediction system 1 according to the present embodiment includes a plurality of hydraulic excavators 10, a server 20 configured so as to be communicatable with each of these hydraulic excavators 10 via a network 40, and a portable terminal 30 communicatable with each of the server 20 and the hydraulic excavators 10 via the network 40.

### [Hydraulic excavator]

The hydraulic excavator 10 is shipped from a manufacturer's factory and used by a predetermined user (e.g., an owner or a user of a hydraulic excavator) on a work site where civil engineering work, construction work, demolishing work, dredging work, or the like is performed. The hydraulic excavator 10 is provided with an operation data collecting section 101. The operation data collecting section 101 is, for example, a part of a control section that performs overall control of the hydraulic excavator 10 and transmits operation data of the hydraulic excavator 10 to the server 20 and the portable terminal 30, together with the excavator's own identification number. It should be noted that the transmission to the server 20 and the portable terminal 30 is periodically performed (e.g., once a day).

### [Portable terminal]

The portable terminal 30 is, for example, a smartphone, a tablet computer, a mobile phone, and a PDA (Personal Data Assistant), and is carried by a maintenance worker or a user of the hydraulic excavator 10. The maintenance worker or the user can obtain information, such as an inspection item on a specific hydraulic excavator 10, via the portable terminal 30, for example. Specifically, when asking for information, such as the inspection item of the specific hydraulic excavator 10, the maintenance worker or the user makes a request to the server 20 via the portable terminal 30 by, for example, directly inputting the identification number of the specific hydraulic excavator 10 into an input section 304 of the portable terminal 30 or selecting the identification number of the specific hydraulic excavator 10 displayed on the input section 304.

As shown in Fig. 2, the portable terminal 30 includes an inspection item screen 301, a main part screen 302, a malfunction probability screen (display section) 303, and the input section 304. The inspection item screen 301, the main part screen 302, and the malfunction probability screen 303 can be switched by the maintenance worker or the user by selection. The details of these screens will be described later.

The input section 304 is adapted to receive input from the maintenance worker or the user and is composed of, for example, a touch panel displayed on a display of the portable terminal 30 and a keyboard. As described above, when asking for information, such as the inspection item of the specific hydraulic excavator 10, the maintenance worker or the user can make a request to the server 20 by inputting the identification number into the input section 304.

Further, for example, when inspection work is performed on any hydraulic excavator 10, the maintenance worker inputs the inspection information (e.g., inspection results) and the identification number of the hydraulic excavator 10 into the input section 304 so that the inspection information can be transmitted to the server 20.

Furthermore, for example, when a part of any hydraulic excavator 10 is replaced or repaired, the maintenance worker can assign a work associated number as a management number via the input section 304 in accordance with the replacement or the repair of the part. At this time, data on the work associated number is transmitted to the server 20 as part replacement/repair information.

Further, for example, when performing inspection work based on the malfunction probability predicted by a malfunction prediction section 205 described later, the operator can transmit the actual inspection performance to the server 20 by inputting it together with the identification number of the hydraulic excavator 10 into the input section 304. The server 20 compares a performance value on the basis of the actual inspection performance based on the input results with a prediction value and learns the results.

### [Server]

The server 20 is a main computer of the malfunction prediction system 1 and is installed in a head office, a branch office, a factory, or a management center of a manufacturer of the hydraulic excavator 10, and periodically collects operation data transmitted from the plurality of hydraulic excavators 10 or the like to intensively manage these hydraulic excavators 10. The server 20 is composed of a microcomputer including, for example, a combination of a CPU (Central Processing Unit) performing computation, a ROM (Read Only Memory) as a secondary storage storing programs for computation, and a RAM (Random Access Memory) as a temporary storage storing computation progress or temporary control variables, and performs processing such as calculation or judgement by executing programs stored.

In the present embodiment, the server 20 predicts the malfunction probability of each part of the hydraulic excavator 10 based on the operation data or the like of the hydraulic excavator 10 as a management target and transmits the predicted results to the portable terminal 30. To achieve this, the server 20 of the present embodiment includes an operation data acquisition section (operation information acquisition section) 201, an inspection data acquisition section (inspection information acquisition section) 202, a part replacement/repair data acquisition section (part replacement/repair information acquisition section) 203, a learning section 204, the malfunction prediction section 205, an inspection item acquisition section 206, a main part acquisition section 207, and a data storing section 210.

The operation data acquisition section 201 acquires the operation data transmitted from the hydraulic excavator 10, and stores and accumulates the acquired operation data together with the identification number of the hydraulic excavator 10 in the data storing section 210. An operation data history 211 in Fig. 2 is the operation data of the hydraulic excavator 10 that is accumulated for a predetermined period of time (e.g., a period from shipping from a factory up to the present) and is stored in the data storing section 210. This operation data relates to operation information, including, for example, an operation starting time, an operation ending time, position information, and information detected by sensors of the hydraulic excavator 10.

The inspection data acquisition section 202 acquires the inspection information of the hydraulic excavator 10 and stores the acquired results as inspection data 212 together with the identification number of the hydraulic excavator 10 in the data storing section 210. The inspection information of the hydraulic excavator 10 is the information transmitted through input into the input section 304 by the maintenance worker, as described above. The inspection data 212 includes date of inspection, inspection items, inspection work contents, inspection results, and the like.

The part replacement/repair data acquisition section 203 acquires the information on part repair and part replacement related to the aforementioned "work associated number" and stores the acquired results of part repair and/or part replacement as part replacement/repair data 213 together with the identification number of the hydraulic excavator 10 in the data storing section 210. The part replacement/repair data 213 includes part repair contents, part replacement contents, date of repair, date of replacement, and the like.

The learning section 204 performs machine learning using a well-known technique, such as decision tree or its evolved technique of gradient boosting. The machine learning uses the operation data histories of the other hydraulic excavators that are collected and accumulated at the time of asking for prediction, as explanatory variables, and the operation data including any of the histories of inspection, repair, and part replacement performed on the other hydraulic excavators, as response variables, so as to create a malfunction model to derive the malfunction probability. It should be noted that the histories of inspection, repair, and part replacement are response variables, indicating the fact of malfunctions. Therefore, when the malfunction history is included in the operation data history, the histories of inspection, repair, and part replacement are unnecessary. Meanwhile, when the malfunction history is not included in the operation data history, the histories of inspection, repair, and part replacement are necessary. **In** other words, when creating the malfunction model described later, the data on the histories of inspection, repair, and part replacement is referenced depending on whether the malfunction history is included in the operation data history.

The malfunction prediction section 205 predicts the malfunction probability of each part of the hydraulic excavator 10 based on the operation data history 211 regularly collected from the hydraulic excavator 10, and the inspection data 212 and the part replacement/repair data 213 which are fed back from the portable terminal when inspection and repair are performed on any hydraulic excavator 10, and stores the predicted results as malfunction probability data 215 together with the identification number of the hydraulic excavator 10 in the data storing section 210. Further, the malfunction probability data is provided to the learning section 204 for machine learning.

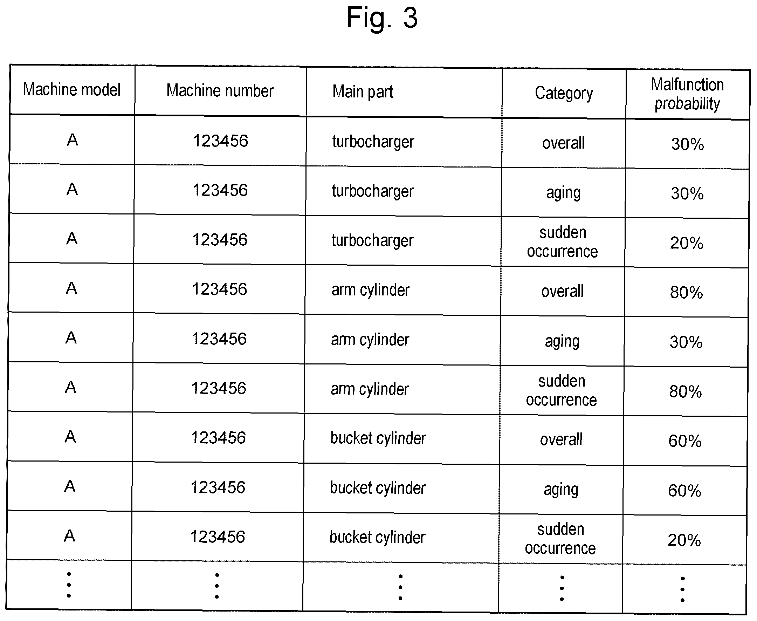

The malfunction probability data 215 is sorted by machine model, machine number, main part, and category as shown in Fig. 3, for example. The predicted malfunction probability is expressed as a percentage and a larger figure indicates a higher malfunction probability (in other words, the urgency of inspection is high). It should be noted that the category here is sorted by "aging," "sudden occurrence," and "overall"; "aging" indicates a possibility of a temporal malfunction such as aged deterioration or wear, "sudden occurrence" indicates a possibility of appearance of a malfunction sign that is assumed from the recent operating conditions, and "overall" indicates the malfunction probability obtained by taking into consideration both "aging" and "sudden occurrence."

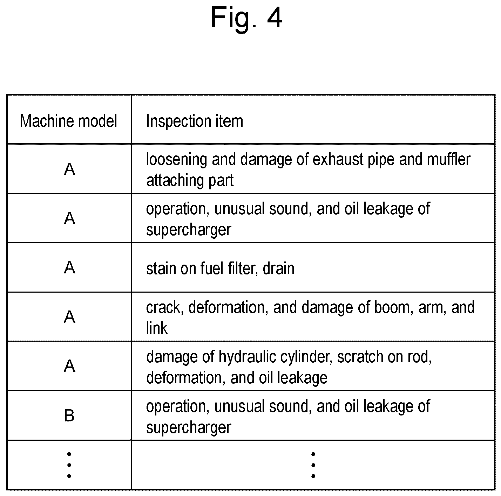

**In** response to a request from the portable terminal 30, the inspection item acquisition section 206 acquires inspection item data 216 of the hydraulic excavator 10 that is stored in the data storing section 210 and transmits it to the portable terminal 30. Examples of the inspection item data 216 include an exhaust pipe, a supercharger, a fuel filter, and a boom as shown in Fig. 4, and these inspection items are sorted by machine model.

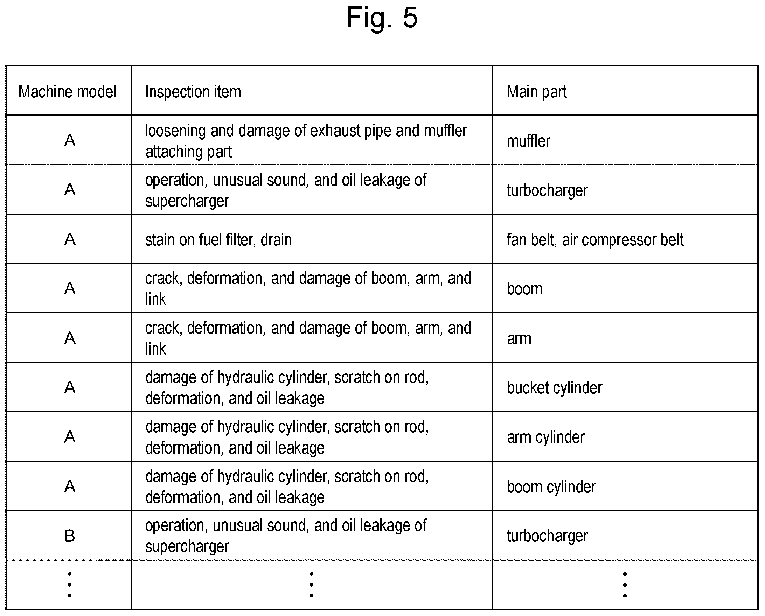

**In** response to a request from the portable terminal 30, the main part acquisition section 207 acquires main part data 217 of the hydraulic excavator 10 that is stored in the data storing section 210 and transmits it to the portable terminal 30. The main part data 217 is sorted by machine model and inspection item, as an example as shown in Fig. 5.

### [Control processing of server]

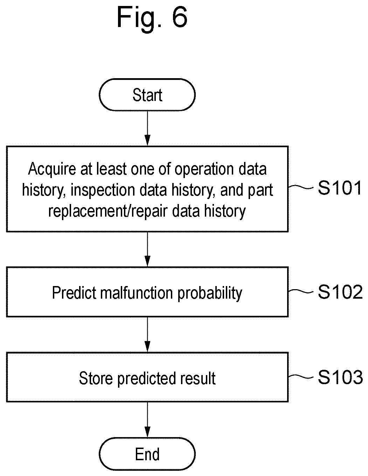

Hereinafter, control processing of the server 20 will be described with reference to Fig. 6. The control processing shown in Fig. 6 is repeatedly executed in a predetermined cycle, for example.

First, in step S101, at least one of the operation data history, the inspection data history, and the part replacement/repair data history of the hydraulic excavator 10 is acquired. It should be noted that "history" is used because the prediction is made based on the history up to the point in time of data acquisition as well as the data upon acquisition. The operation data acquisition section 201 acquires the operation data transmitted from the hydraulic excavator 10 together with the identification number of the hydraulic excavator 10 and stores the acquired results in the data storing section 210. The inspection data acquisition section 202 acquires the inspection data transmitted from the portable terminal 30 when any hydraulic excavator 10 is inspected, together with the identification number of the hydraulic excavator 10, and stores the acquired results in the data storing section 210. Further, as described above, the inspection data history and the part replacement/repair data history are both malfunction-related information. These are essential variables for malfunction prediction, and are thus not referenced when included in the operation data history, and otherwise referenced.

The part replacement/repair data acquisition section 203 acquires the part replacement/repair data transmitted from the portable terminal 30 when any hydraulic excavator 10 is repaired, together with the identification number of the hydraulic excavator 10, and stores the acquired results in the data storing section 210.

Upon receiving the feedback of the inspection/repair results (acquisition of the inspection data history and the part replacement/repair data history) of any hydraulic excavator 10 from the portable terminal 30, the learning section 204 "updates" every time the malfunction model that is created based on at least one of the operation data history, the inspection data history and the part replacement/repair data history that are stored in the data storing section 210, and performs comparison with the malfunction probability data stored in the malfunction prediction section 205. Then, deviation (disparity) data 214 is created based on the "difference" between the malfunction probability data (prediction value) and the actual inspection results (performance value) and is stored in the data storing section 210 together with the identification number of the hydraulic excavator 10. The deviation data 214 includes deviation contents, results of deviation analysis, correction values reflecting the analysis results, and the like, and is used in machine learning for prediction of the malfunction probability.

**In** step S102 subsequent to step S101, the malfunction probability is predicted. At this time, the malfunction prediction section 205 predicts the malfunction probability of each part of the hydraulic excavator 10 from the operation data history, the inspection data acquired by the inspection data acquisition section 202, the part replacement/repair data acquired by the part replacement/repair data acquisition section 203, and the malfunction model created by the learning section 204. Specifically, the malfunction model at the time of asking for malfunction prediction is extracted from the data storing section 210 and the operation data history of the hydraulic excavator for which malfunction prediction is asked is substituted for the model, so that the malfunction probability is predicted in accordance with the proximity to the performance value (operation data history) of the hydraulic excavator which had a malfunction in the past, and the malfunction probability data is created.

**In** step S103 subsequent to step S102, the malfunction prediction section 205 stores the predicted results together with the identification number of the hydraulic excavator 10 in the data storing section 210. Thus, a series of the control processing ends.

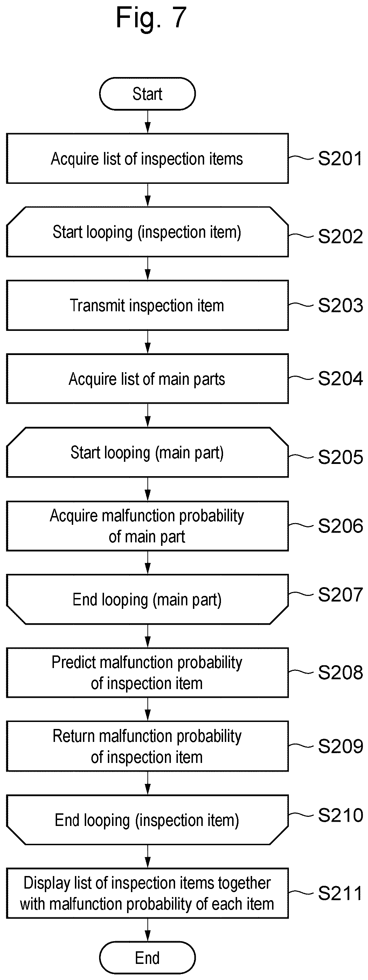

Next, with reference to Fig. 7 to Fig. 12, control processing on each screen of the portable terminal 30 will be described.

### [Inspection item screen]

First, the inspection item screen 301 of the portable terminal 30 will be described based on Fig. 7. Fig. 7 is a flowchart showing control processing on the inspection item screen of the portable terminal. The control processing shown in Fig. 7 is executed cooperatively by the portable terminal 30 and the server 20, and more specifically, part of step S201 and steps S204 to S209 are processing executed by the server 20, and the other steps are processing executed by the portable terminal 30.

The control processing shown in Fig. 7 is started, by for example, the worker or the user selecting the inspection item screen 301 displayed on the portable terminal 30. First, in step S201, a list of inspection items is acquired. At this time, the maintenance worker or the user requests the list of inspection items of the hydraulic excavator 10 from the server 20 by, for example, selecting (e.g., tapping) the inspection item screen 301. **In** response to the request, the inspection item acquisition section 206 of the server 20 acquires the list of inspection items from the inspection item data 216 and transmits it to the portable terminal 30.

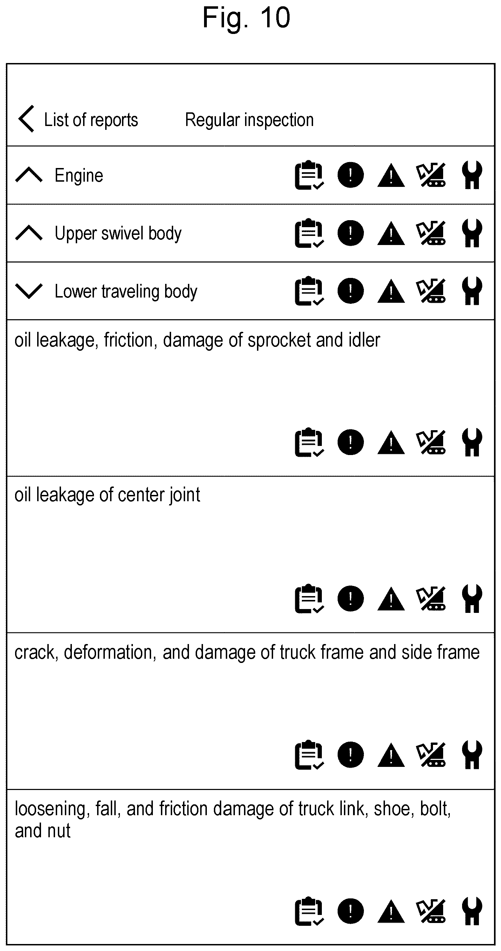

Then, the portable terminal 30 receives the list of inspection items transmitted from the server 20 and displays the received contents on the inspection item screen 301. The contents displayed on the inspection item screen 301 include listed inspection items, such as an "engine," an "upper swivel body," and a "lower traveling body" as shown in Fig. 10, for example.

Subsequently, loop handling on the inspection items that is shown in steps S202 to S210 is performed. Specifically, when the maintenance worker or the user selects one (e.g., the "lower traveling body" shown in Fig. 10) from the list of a plurality of inspection items displayed on the inspection item screen 301, for example, the portable terminal 30 transmits the selected inspection item to the server 20 to request a list of main parts from the server 20 (see step S203).

**In** step S204 subsequent to step S203, in response to the request, the main part acquisition section 207 of the server 20 acquires the list of main parts from the main part data 217. When the "lower traveling body" is selected as shown in Fig. 10, for example, the main part acquisition section 207 acquires the list of main parts, such as a sprocket, a center joint, a truck frame, a side frame, and a truck link, that are related to the "lower traveling body."

Next, loop handling for acquisition of malfunction probabilities that is shown in steps S205 to step S207 is performed on these acquired main parts. That is, the malfunction probabilities of the main parts acquired in step S205 are sequentially acquired (see step S206). The malfunction probabilities of the main parts are predicted by the malfunction prediction section 205 and stored as the malfunction probability data 215 in the data storing section 210.

**In** step S208 subsequent to step S207, the malfunction prediction section 205 calculates the malfunction probability of the inspection item selected above, based on the malfunction probabilities of the main parts acquired in steps S205 to S207. In step S209 subsequent to step S208, the server 20 returns (in other words, transmits) the malfunction probability of the inspection item predicted in step S208 to the portable terminal 30.

Such loop handling on the inspection item that is shown in steps S202 to S210 is performed for each selected inspection item. When the "upper swivel body" and the "engine" are sequentially selected after the "lower traveling body," for example, steps S203 to S209 are repeated for the "upper swivel body" and the "engine" in this order.

In step S211 subsequent to step S210, the portable terminal 30 displays the received list of inspection items together with the malfunction probability of each inspection item on the inspection item screen 301. Thus, a series of the control processing on the inspection item screen ends.

### [Main part screen]

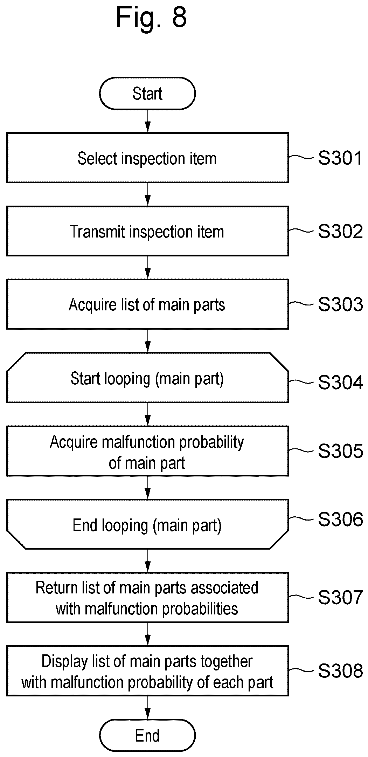

Next, the main part screen of the portable terminal will be described based on Fig. 8. Fig. 8 is a flowchart showing control processing on the main part screen of the portable terminal. The control processing shown in Fig. 8 is executed cooperatively by the portable terminal 30 and the server 20, and more specifically, steps S303 to S307 are processing executed by the server 20, and the other steps are processing executed by the portable terminal 30.

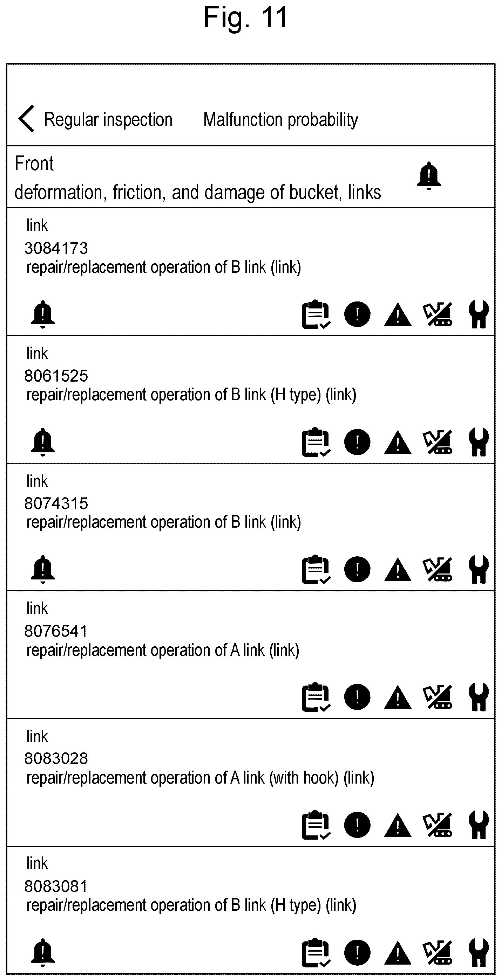

The control processing shown in Fig. 8 is started, by, for example, the worker or the user selecting the main part screen 302 displayed on the portable terminal 30. First, in step S301, the inspection item is selected. When the maintenance worker or the user selects the inspection item "front" as shown in Fig. 11, for example, the portable terminal 30 transmits the selected inspection item to the server 20 to request a list of related main parts from the server 20 (see step S302).

In step S303 subsequent to step S302, in response to the request, the main part acquisition section 207 of the server 20 acquires the list of main parts related to the inspection item from the main part data 217. Since the "front" is selected here, the main part acquisition section 207 acquires the list of main parts, such as a bucket and links, that are related to the "front."

Next, loop handling for acquisition of malfunction probabilities of the main parts that is shown in steps S304 to S306 is performed on these acquired main parts. That is, the malfunction probabilities of the main parts acquired in step S303 are sequentially acquired (see step S305). The malfunction probabilities of the main parts are predicted by the malfunction prediction section 205 and stored as the malfunction probability data 215 in the data storing section 210.

In step S307 subsequent to step S306, the server 20 returns (in other words, transmits) the list of main parts associated with the malfunction probabilities to the portable terminal 30.

In step S308 subsequent to step S307, the portable terminal 30 displays the received list of main parts together with the malfunction probability of each part on the main part screen 302. At this time, as shown in Fig. 11, for example, the malfunction probability for each target link is displayed. Then, upon ending of step S308, a series of the control processing on the main part screen ends.

### [Malfunction probability screen]

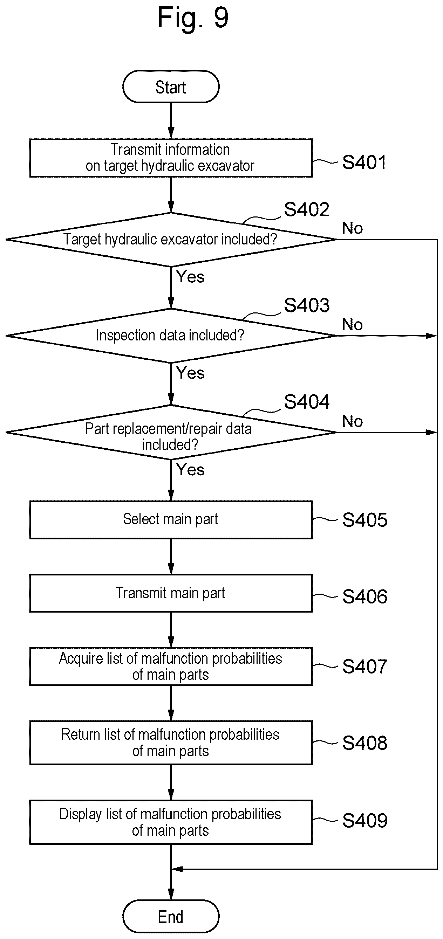

Next, the malfunction probability screen of the portable terminal will be described based on Fig. 9. Fig. 9 is a flowchart showing control processing on the malfunction probability screen of the portable terminal. The control processing shown in Fig. 9 is executed cooperatively by the portable terminal 30 and the server 20, and more specifically, steps S402 to S404 and steps S407 to S408 are processing performed by the server 20, and the other steps are processing performed by the portable terminal 30.

First, in step S401, information on a target hydraulic excavator is transmitted. At this time, the maintenance worker or the user makes a request to the server 20 by, for example, inputting the identification number of the hydraulic excavator 10, for which the malfunction probability is intended to be checked, into the input section 304 of the portable terminal 30.

**In** step S402 subsequent to step S401, it is determined whether the designated target hydraulic excavator is included in the management targets. At this time, the server 20 determines, based on the transmitted identification number of the hydraulic excavator, whether the hydraulic excavator corresponding to the identification number is included in a plurality of hydraulic excavators under management. When it is determined that the target hydraulic excavator is not included, the control processing ends. Meanwhile, when it is determined that the target hydraulic excavator is included, the control processing proceeds to step S403.

**In** step S403, the server 20 determines whether there is inspection data of the target hydraulic excavator. When it is determined that there is no inspection data, the control processing ends. Meanwhile, when it is determined that there is inspection data, the control processing proceeds to step S404.

**In** step S404, the server 20 determines whether there is part replacement/repair data of the target hydraulic excavator. When it is determined that there is no part replacement/repair data of the target hydraulic excavator, the control processing ends. Meanwhile, when it is determined that there is part replacement/repair data, the control processing proceeds to step S405.

In step S405, the main part is selected. At this time, when the maintenance worker or the user selects the main part displayed on the portable terminal 30, the portable terminal 30 transmits the selected main part to the server 20 to request a list of related main parts from the server 20 (see step S406). The maintenance worker or the user selects the "bucket, links" related to the "front" as shown in Fig. 11, for example, and transmits them to the server 20.

In step S407 subsequent to step S406, in response to the request, the server 20 acquires a list of malfunction probabilities of main parts from the malfunction probability data 215. In step S408 subsequent to step S407, the server 20 returns (in other words, transmits) the acquired list of malfunction probabilities of main parts to the portable terminal 30.

In step S409 subsequent to step S408, the portable terminal 30 displays the received list of malfunction probabilities of main parts on the malfunction probability screen 303. As shown in Fig. 11, for example, on the malfunction probability screen 303, a plurality of bucket links is classified as "A link" or "B link," and is assigned respective model numbers. Further, for each target link, an icon indicating an inspection recommended level is shown. It should be noted that in Fig. 11, for convenience sake in explanation, a bell icon is used, but the representation may not necessarily be a bell as long as the inspection recommended level can be visually recognized.

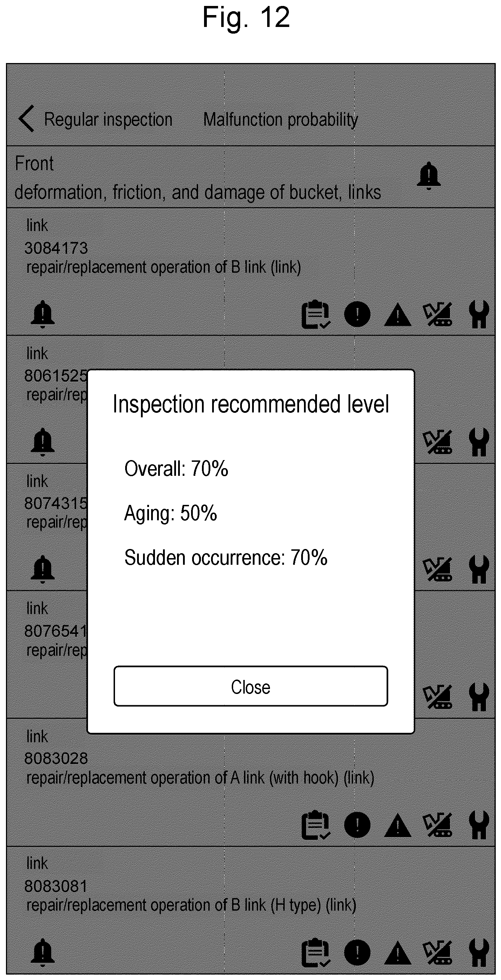

The "inspection recommended level" is used here in place of the malfunction probability for easier understanding by the user (see Fig. 12). That is, the inspection recommended level is an expression meaning the same as and substituting for the malfunction probability for easier understanding by the user. Further, the bell icon is preferably color-coded in accordance with the range of the inspection recommended level. For example, for the inspection recommended level of 90% or higher, the bell icon is red, for the inspection recommended level of 60% or higher and less than 90%, the bell icon is yellow, and for the inspection recommended level of 40% or higher and less than 60%, the bell icon is blue. Such visual appealing produces an advantage of attracting attention of the maintenance worker or the user.

Here, when the displayed bell icon is selected, the inspection recommended level for each constituent part is further displayed with the bell icon. Further, when the bell icon of each part is selected, the inspection recommended level for each category (i.e., "overall," "aging," and "sudden occurrence") is displayed with a specific numerical value as shown in Fig. 12.

Upon ending of step S409, a series of the control processing on the malfunction probability screen ends.

**In** the malfunction prediction system 1 configured as described above, the malfunction prediction section 205 predicts the malfunction probability of each part of the hydraulic excavator 10 based on the operation data acquired by the operation data acquisition section 201, the inspection data acquired by the inspection data acquisition section 202, and the part replacement/repair data acquired by the part replacement/repair data acquisition section 203. **In** this manner, the malfunction probability is predicted based on the operation data of the hydraulic excavator 10 by further incorporating the inspection data and the part replacement/repair data, so that the malfunction prediction accuracy can be improved.

Further, since the malfunction probability of each part of the hydraulic excavator 10 is predicted based on the operation data, the inspection data, and the part replacement/repair data of the hydraulic excavator 10 by further incorporating the deviation data 214 learned by the learning section 204, so that the malfunction prediction accuracy can be further improved.

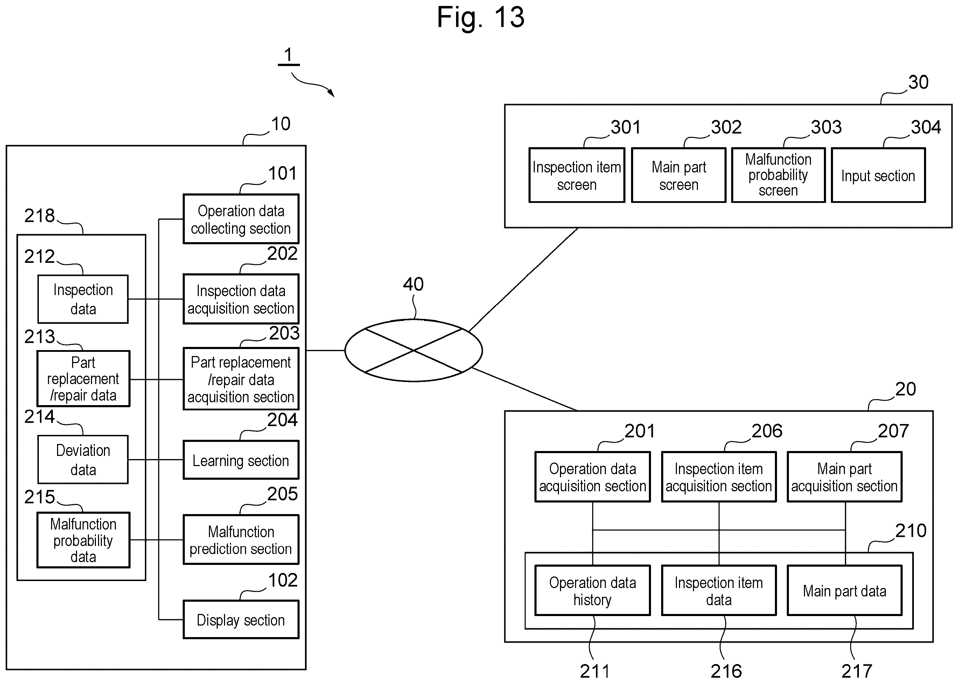

Further, in the present embodiment, in the example that has been described, the operation data acquisition section 201, the inspection data acquisition section 202, the part replacement/repair data acquisition section 203, the learning section 204, and the malfunction prediction section 205 are provided in the server 20, but may be provided in the hydraulic excavator 10 as shown in Fig. 13, for example. For example, the inspection data acquisition section 202, the part replacement/repair data acquisition section 203, the learning section 204, and the malfunction prediction section 205 may be provided in the control section of the hydraulic excavator 10 together with a data storing section 218 that stores the inspection data 212, the part replacement/repair data 213, the deviation data 214, and the malfunction probability data 215. It should be noted that in this case, the operation data collecting section 101 functions as the operation data acquisition section. This can reduce the processing of the server 20 and also increase variations of the malfunction prediction system 1. Further, the hydraulic excavator 10 is preferably provided with a display section 102 that displays the malfunction probability. This allows the hydraulic excavator 10 as well as the portable terminal 30 to identify the malfunction probability.

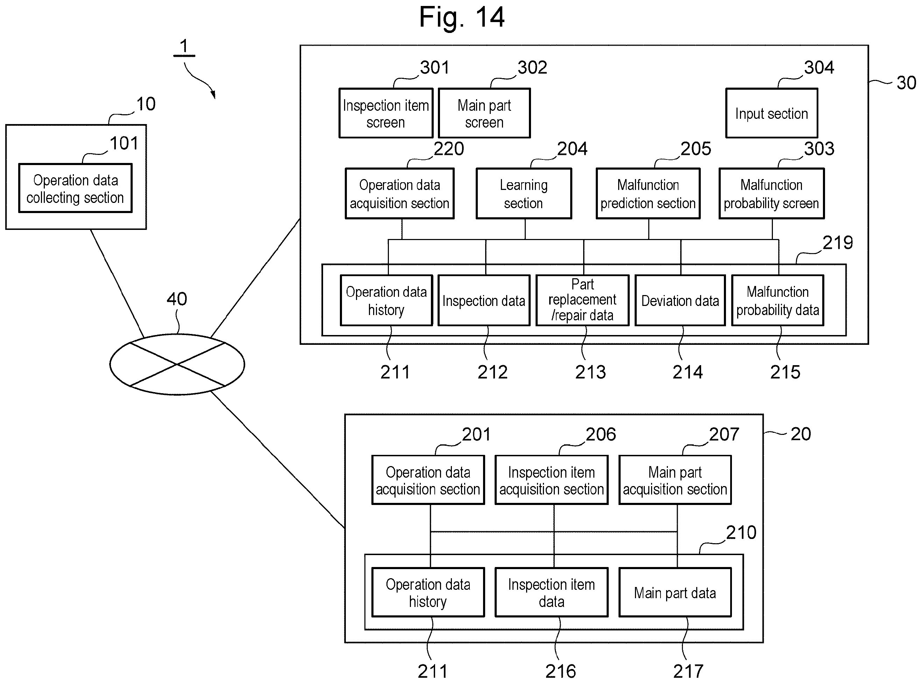

Further, as shown in Fig. 14, an operation data acquisition section (operation information acquisition section) 220, the learning section 204, and the malfunction prediction section 205 may be provided in the portable terminal 30 together with a data storing section 219. Here, the operation data acquisition section 220 acquires the operation data transmitted from the hydraulic excavator 10, similarly to the aforementioned operation data acquisition section 201, and stores and accumulates the acquired operation data together with the identification number of the hydraulic excavator 10 in the data storing section 219. In the data storing section 219, the operation data history 211, the inspection data 212, the part replacement/repair data 213, the deviation data 214, and the malfunction probability data 215 are stored. It should be noted that the inspection data 212 and the part replacement/repair data 213 can be directly acquired by the maintenance worker through input. This can reduce the processing of the server 20 and also increase variations of the malfunction prediction system 1.

### Reference Signs List

- 1: Malfunction prediction system
- 10: Hydraulic excavator
- 20: Server
- 30: Portable terminal
- 40: Network
- 101: Operation data collecting section
- 102: Display section
- 201, 220: Operation data acquisition section (operation information acquisition section)
- 202: Inspection data acquisition section (inspection information acquisition section)
- 203: Part replacement/repair data acquisition section (part replacement/repair information acquisition section)
- 204: Learning section
- 205: Malfunction prediction section
- 206: Inspection item acquisition section
- 207: Main part acquisition section
- 210, 218, 219: Data storing section
- 211: Operation data history
- 212: Inspection data
- 213: Part replacement/repair data
- 214: Deviation data
- 215: Malfunction probability data
- 216: Inspection item data
- 217: Main part data
- 301: Inspection item screen
- 302: Main part screen
- 303: Malfunction probability screen (display section)
- 304: Input section

## Claims

1. A malfunction prediction system that predicts a malfunction of a work machine, the malfunction prediction system comprising:
an operation information acquisition section (201) that acquires operation information of the work machine;
an inspection information acquisition section (202) that acquires inspection information of the work machine;
**characterized by**
a part replacement/repair information acquisition section (203) that acquires part replacement/repair information of the work machine; and
a malfunction prediction section (205) that predicts a malfunction probability of each part of the work machine, based on the operation information acquired by the operation information acquisition section (201), the inspection information acquired by the inspection information acquisition section (202), the part replacement/repair information acquired by the part replacement/repair information acquisition section (203), and deviation information between the malfunction probability of each part of the work machine and inspection performance of the work machine stored in a storage section.

2. The malfunction prediction system according to claim 1, further comprising a learning section (204) that learns the deviation information between the malfunction probability predicted by the malfunction prediction section (205) and the inspection performance of the work machine,
wherein the malfunction prediction section (205) predicts the malfunction probability of each part of the work machine, based on the deviation information learned by the learning section (204).

3. The malfunction prediction system according to claim 2, further comprising a server (20) communicatable with the work machine,
wherein the operation information acquisition section (201), the inspection information acquisition section (202), the part replacement/repair information acquisition section (203), the malfunction prediction section (205), and the learning section (204) are provided in the server (20).

4. The malfunction prediction system according to claim 3, further comprising a portable terminal (30) communicatable with the server (20),
wherein the portable terminal (30) is provided with a display section that displays the malfunction probability predicted by the malfunction prediction section (205).

5. The malfunction prediction system according to claim 2, further comprising a portable terminal (30) communicatable with the work machine,
wherein the operation information acquisition section (201), the inspection information acquisition section (202), the part replacement/repair information acquisition section (203), the malfunction prediction section (205), and the learning section (204) are provided in the portable terminal (30).

6. The malfunction prediction system according to claim 5, wherein the portable terminal (30) is provided with a display section that displays the malfunction probability predicted by the malfunction prediction section (205).

7. The malfunction prediction system according to claim 2, wherein the operation information acquisition section (201), the inspection information acquisition section (202), the part replacement/repair information acquisition section (203), the malfunction prediction section (205), and the learning section (204) are provided in the work machine.

8. The malfunction prediction system according to claim 7, wherein the work machine is provided with a display section that displays the malfunction probability predicted by the malfunction prediction section (205).

## Patentansprüche

1. Störungsvorhersagesystem, das eine Störung einer Arbeitsmaschine vorhersagt, wobei das Störungsvorhersagesystem umfasst:
einen Betriebsinformations-Erfassungsabschnitt (201), der Betriebsinformationen der Arbeitsmaschine erfasst;
einen Überprüfungsinformations-Erfassungsabschnitt (202), der Überprüfungsinformationen der Arbeitsmaschine erfasst;
**gekennzeichnet durch**
einen Teileersatzinformations/Teilereparaturinformations-Erfassungsabschnitt (203), der Teileersatzinformationen/Teilereparaturinformationen der Arbeitsmaschine erfasst; und
einen Störungsvorhersageabschnitt (205), der auf der Grundlage der Betriebsinformationen, die durch den Betriebsinformations-Erfassungsabschnitt (201) erfasst werden, der Überprüfungsinformationen, die durch den Überprüfungsinformations-Erfassungsabschnitt (202) erfasst werden, der Teileersatzinformationen/Teilereparaturinformationen, die durch den Teileersatzinformations/Teilereparaturinformations-Erfassungsabschnitt (203) erfasst werden, und von Abweichungsinformationen zwischen der Störungswahrscheinlichkeit jedes Teils der Arbeitsmaschine und der Überprüfungsleistung der Arbeitsmaschine, die in einem Ablagespeicherabschnitt gespeichert sind, eine Störungswahrscheinlichkeit jedes Teils der Arbeitsmaschine vorhersagt.

2. Störungsvorhersagesystem nach Anspruch 1, das ferner einen Lernabschnitt (204) umfasst, der die Abweichungsinformationen zwischen der durch den Störungsvorhersageabschnitt (205) vorhergesagten Störungswahrscheinlichkeit und der Überprüfungsleistung der Arbeitsmaschine lernt,
wobei der Störungsvorhersageabschnitt (205) die Störungswahrscheinlichkeit jedes Teils der Arbeitsmaschine auf der Grundlage der durch den Lernabschnitt (204) gelernten Abweichungsinformationen vorhersagt.

3. Störungsvorhersagesystem nach Anspruch 2, das ferner einen Server (20), der mit der Arbeitsmaschine kommunikationsfähig ist, umfasst,
wobei der Betriebsinformations-Erfassungsabschnitt (201), der Überprüfungsinformations-Erfassungsabschnitt (202), der Teileersatzinformations/Teilereparaturinformations-Erfassungsabschnitt (203), der Störungsvorhersageabschnitt (205) und der Lernabschnitt (204) in dem Server (20) vorgesehen sind.

4. Störungsvorhersagesystem nach Anspruch 3, das ferner ein tragbares Endgerät (30), das mit dem Server (20) kommunikationsfähig ist, umfasst,
wobei das tragbare Endgerät (30) mit einem Anzeigeabschnitt versehen ist, der die durch den Störungsvorhersageabschnitt (205) vorhergesagte Störungswahrscheinlichkeit anzeigt.

5. Störungsvorhersagesystem nach Anspruch 2, das ferner ein tragbares Endgerät (30), das mit der Arbeitsmaschine kommunikationsfähig ist, umfasst,
wobei der Betriebsinformations-Erfassungsabschnitt (201), der Überprüfungsinformations-Erfassungsabschnitt (202), der Teileersatzinformations/Teilereparaturinformations-Erfassungsabschnitt (203), der Störungsvorhersageabschnitt (205) und der Lernabschnitt (204) in dem tragbaren Endgerät (30) vorgesehen sind.

6. Störungsvorhersagesystem nach Anspruch 5, wobei das tragbare Endgerät (30) mit einem Anzeigeabschnitt versehen ist, der die durch den Störungsvorhersageabschnitt (205) vorhergesagte Störungswahrscheinlichkeit anzeigt.

7. Störungsvorhersagesystem nach Anspruch 2, wobei der Betriebsinformations-Erfassungsabschnitt (201), der Überprüfungsinformations-Erfassungsabschnitt (202), der Teileersatzinformations/Teilereparaturinformations-Erfassungsabschnitt (203), der Störungsvorhersageabschnitt (205) und der Lernabschnitt (204) in der Arbeitsmaschine vorgesehen sind.

8. Störungsvorhersagesystem nach Anspruch 7, wobei die Arbeitsmaschine mit einem Anzeigeabschnitt versehen ist, der die durch den Störungsvorhersageabschnitt (205) vorhergesagte Störungswahrscheinlichkeit anzeigt.

## Revendications

1. Système de prédiction de dysfonctionnement qui prédit un dysfonctionnement d'une machine de chantier, le système de prédiction de dysfonctionnement comprenant :
une section d'acquisition d'informations de fonctionnement (201) qui acquiert des informations de fonctionnement de la machine de chantier ;
une section d'acquisition d'informations d'inspection (202) qui acquiert des informations d'inspection de la machine de chantier ;
**caractérisé par**
une section d'acquisition d'informations de remplacement/réparation de pièce (203) qui acquiert des informations de remplacement/réparation de pièce de la machine de chantier ; et
une section de prédiction de dysfonctionnement (205) qui prédit une probabilité de dysfonctionnement de chaque pièce de la machine de chantier, sur la base des informations de fonctionnement acquises par la section d'acquisition d'informations de fonctionnement (201), des informations d'inspection acquises par la section d'acquisition d'informations d'inspection (202), des informations de remplacement/réparation de pièce acquises par la section d'acquisition d'informations de remplacement/réparation de pièce (203), et des informations de déviation entre la probabilité de dysfonctionnement de chaque pièce de la machine de chantier et une performance d'inspection de la machine de chantier stockées dans une section de stockage.

2. Système de prédiction de dysfonctionnement selon la revendication 1, comprenant en outre une section d'apprentissage (204) qui apprend les informations de déviation entre la probabilité de dysfonctionnement prédite par la section de prédiction de dysfonctionnement (205) et la performance d'inspection de la machine de chantier,
dans lequel la section de prédiction de dysfonctionnement (205) prédit la probabilité de dysfonctionnement de chaque pièce de la machine de chantier, sur la base des informations de déviation apprises par la section d'apprentissage (204).

3. Système de prédiction de dysfonctionnement selon la revendication 2, comprenant en outre un serveur (20) pouvant communiquer avec la machine de chantier,
dans lequel la section d'acquisition d'informations de fonctionnement (201), la section d'acquisition d'informations d'inspection (202), la section d'acquisition d'informations de remplacement/réparation de pièce (203), la section de prédiction de dysfonctionnement (205), et la section d'apprentissage (204) sont prévues dans le serveur (20).

4. Système de prédiction de dysfonctionnement selon la revendication 3, comprenant en outre un terminal portable (30) pouvant communiquer avec le serveur (20),
dans lequel le terminal portable (30) est muni d'une section d'affichage qui affiche la probabilité de dysfonctionnement prédite par la section de prédiction de dysfonctionnement (205).

5. Système de prédiction de dysfonctionnement selon la revendication 2, comprenant en outre un terminal portable (30) pouvant communiquer avec la machine de chantier,
dans lequel la section d'acquisition d'informations de fonctionnement (201), la section d'acquisition d'informations d'inspection (202), la section d'acquisition d'informations de remplacement/réparation de pièce (203), la section de prédiction de dysfonctionnement (205), et la section d'apprentissage (204) sont prévues dans le terminal portable (30).

6. Système de prédiction de dysfonctionnement selon la revendication 5, dans lequel le terminal portable (30) est muni d'une section d'affichage qui affiche la probabilité de dysfonctionnement prédite par la section de prédiction de dysfonctionnement (205).

7. Système de prédiction de dysfonctionnement selon la revendication 2, dans lequel la section d'acquisition d'informations de fonctionnement (201), la section d'acquisition d'informations d'inspection (202), la section d'acquisition d'informations de remplacement/réparation de pièce (203), la section de prédiction de dysfonctionnement (205), et la section d'apprentissage (204) sont prévues dans la machine de chantier.

8. Système de prédiction de dysfonctionnement selon la revendication 7, dans lequel la machine de chantier est munie d'une section d'affichage qui affiche la probabilité de dysfonctionnement prédite par la section de prédiction de dysfonctionnement (205).
